Europäisches Patentamt

European Patent Office

Office européen des brevets

(19)

(11) **EP 0 547 539 B1**

(12)

# FASCICULE DE BREVET EUROPEEN

(45) Date de publication et mention
de la délivrance du brevet:
**23.04.1997   Bulletin 1997/17**

(51) Int Cl.6: **H04L 7/02**

(21) Numéro de dépôt: **92121235.3**

(22) Date de dépôt: **14.12.1992**

(54) **Dispositif de récupération de rythme pour installation de réception utilisant l'égalisation auto-adaptive à suréchantillonnage associée à la démodulation différentiellement cohérente**

Taktwiedergewinnungseinrichtung für Empfangsanlage mit adaptiver Entzerrung mittels Überabtastung zusammen mit differentieller kohärenter Demodulation

Clock recovery circuit for a receiving unit with auto-adaptive equalisation using oversampling together with differentially coherent demodulation

(84) Etats contractants désignés:
**DE ES FR GB IT SE**

(30) Priorité: **19.12.1991  FR 9115802**

(43) Date de publication de la demande:
**23.06.1993   Bulletin 1993/25**

(73) Titulaire: **ALCATEL TELSPACE**
**92734 Nanterre Cédex (FR)**

(72) Inventeurs:
 • **Sehier, Philippe**
  **F-92300 Levallois-Perret (FR)**
 • **Truelle, Véronique**
  **F-75015 Paris (FR)**

(74) Mandataire: **Weinmiller, Jürgen et al**
**Postfach 24**
**82336 Feldafing (DE)**

(56) Documents cités:
**US-A- 4 344 176**

 • **IEEE GLOBAL TELECOMMUNICATIONS CONFERENCE vol. 2, 2 Décembre 1990, SAN DIEGO (US) pages 923 - 927 NORM W.K. LO ET AL. 'Adaptive equalization and diversity combining for a mobile radio channel.'**
 • **PROCEEDINGS OF THE IEEE. vol. 73, no. 9, 1 Septembre 1985, NEW YORK US pages 1349 - 1387 SHAHID U.H. QURESHI 'Adaptive aqualization'**

## Description

L'invention se rapporte à un dispositif de récupération de rythme pour installation de réception utilisant l'égalisation auto-adaptative à sur-échantillonnage associée à la démodulation différentiellement cohérente. Elle s'applique en particulier à la transmission numérique d'information au travers d'un canal dispersif à multi-trajets, créant de l'interférence inter-symboles sur l'information reçue, par exemple à la transmission numérique par faisceaux hertziens sur canal à vue directe longue ou sur canal troposphérique. Elle est applicable aux systèmes de transmission qui utilisent une modulation linéaire démodulable en différentiel, telle que la QPSK, ou la MPSK, et avantageusement pour des installations de réception pouvant fonctionner en diversité.

La présence d'interférence inter-symboles à tendance à dégrader de façon importante les performances de l'installation de réception utilisée dans une transmission numérique par faisceau hertzien. Pour remédier à cet inconvénient, il est connu, dans le cas de la modulation cohérente, d'utiliser la technique de l'égalisation auto-adaptative en faisant usage d'un filtre auto-adaptatif dont la fonction est de diminuer au mieux l'interférence inter-symboles. Dans les systèmes les plus répandus, car les plus simples, le critère d'optimisation du filtre est la minimisation de l'erreur quadratique moyenne, et les coefficients du filtre sont actualisés par l'algorithme du gradient stochastique.

Pour améliorer encore les performances des installations de réception utilisant l'égalisation auto-adaptative à démodulation cohérente, il est connu de faire appel à la technique de diversité en équipant chaque voie de réception d'un filtre d'égalisation auto-adaptative agissant sur le signal reçu et en reliant la sortie du démodulateur à un filtre auto-adaptatif dit à retour de décision qui agit sur les symboles décidés. En démodulation cohérente, l'algorithme permettant l'adaptation des coefficients des filtres est bien connu, et il existe de nombreuses installations de réception réalisées à ce jour. Un exemple d'installation de réception utilisant l'égalisation auto-adaptative en diversité est décrite dans le brevet US-A-3879664.

L'inconvénient de la démodulation cohérente est la nécessité d'estimer la phase du signal reçu, cette estimation est particulièrement difficile à réaliser, car les canaux considérés génèrent des variations rapides de phase pouvant entraîner un décrochage du récepteur.

Une solution connue pour éviter l'estimation de phase est d'utiliser la démodulation différentiellement cohérente, plus couramment appelée "démodulation différentielle". Selon cette technique, l'échantillon précédent sert de référence de phase à l'échantillon de signal traité. Une installation de réception utilisant l'égalisation auto-adaptative associée à la démodulation différentielle est décrite dans la demande de brevet FR-A-2 641 922.

Pour les installations de réception utilisant l'égalisation auto-adaptative associée à la démodulation différentielle, il est nécessaire de synchroniser la base de temps ou horloge du récepteur sur la base de temps de l'émetteur qui définit la cadence d'émission des symboles d'information. On connaît des dispositifs de récupération de rythme qui opèrent sur l'enveloppe complexe du signal reçu avant l'égalisation.

Toutefois ces dispositifs connus sont peu performants lorsque le canal de transmission est dispersif.

Par ailleurs, le fonctionnement du récepteur en diversité oblige à combiner les estimations ce qui rend complexe le récepteur. En outre, les opérations d'asservissement de l'instant d'échantillonnage étant indépendantes des opérations d'égalisation, l'instant d'échantillonnage fixé par le dispositif de récupération de rythme ne permet pas à l'égaliseur de fonctionner dans les meilleures conditions. En particulier, les sauts de cycles successifs (survenant au bout d'un certain temps) ont tendance à faire décrocher l'égaliseur ce qui interdit de garantir un fonctionnement correct du récepteur à long terme.

En fait ce type de dispositif de récupération de rythme est adapté à des égaliseurs à faible capacité de correction pour des transmissions numériques au travers de canaux faiblement dispersifs mais pas à des égaliseurs pour des transmissions numériques au travers de canaux fortement dispersifs tels que le canal troposphérique.

On connaît aussi des dispositifs de récupération de rythme utilisant les coefficients des filtres transversaux de l'égaliseur pour corriger la phase du rythme récupéré à partir d'un critère d'asservissement du temps de propagation de groupe des filtres, comme décrit dans le document IEEE Transactions on Communication, vol - COM-24, N° 8, août 1976.

Les inconvénients de tels dispositifs de récupération de rythme sont de plusieurs ordres :

- pour un égaliseur fonctionnant en diversité, et asservi au moyen d'une erreur unique qui est générée après combinaison, le temps de propagation de groupe de chacun des filtres n'est plus porteur d'information et toute combinaison de ces informations n'est pas susceptible de fournir un signal d'estimation utile de l'erreur de phase sur le rythme récupéré.
- Les performances de la boucle d'asservissement de rythme, en terme de plage d'acquisition et de largeur de bande, sont limitées par la bande de boucle de l'égaliseur qui est de quelques hertz. Un tel dispositif de récupération de rythme nécessite l'utilisation d'horloges à haute stabilité pour ne pas dégrader les performances de l'égaliseur puisque les coefficients des filtres sont tenus de varier pour s'adapter aux variations de phases aléatoires de l'horloge

Une solution pour rendre peu sensible l'égaliseur auto-adaptatif à l'instant d'échantillonnage du signal est de sur-échantillonner le signal reçu, avant égalisation, à une fréquence multiple de la fréquence symbole. Le facteur de sur-échantillonnage le plus utilisé est égal à 2. Selon un tel schéma, il apparaîtrait que la récupération de rythme n'est plus nécessaire puisqu'elle est réalisée par l'égaliseur.

Toutefois ceci conduirait à envisager l'utilisation d'un égaliseur dont le nombre de coefficients est illimité. En pratique, cette solution n'est pas réalisable puisque le nombre de coefficients des filtres doit être fini.

L'objet de l'invention est de remédier à cet inconvénient. A cet effet, l'invention propose un dispositif de récupération de rythme pour installation de réception utilisant l'égalisation auto-adaptative à suréchantillonnage associée à la démodulation différentiellement cohérente, l'installation de réception produisant un signal de sortie représentatif de symboles décidés restitués au rythme symbolique en réponse à des signaux transmis au travers d'un canal dispersif et reçus sur une pluralité de voies de diversité, ce dispositif se caractérisant en ce qu'il comporte:

- un moyen sensible au signal de sortie pour dériver un signal de codage par transition;
- une pluralité de moyens estimateurs de canal, chacun relié en sortie du moyen de sur-échantillonnage équipant chaque voie de diversité, chaque moyen estimateur de canal recevant en outre le signal de codage par transition pour produire un signal d'estimation de canal;
- un moyen sensible au signaux d'estimation de canal pour produire un signal d'erreur de rythme symbolique;
- un moyen asservi par le signal d'erreur pour produire un signal d'horloge correspondant au rythme symbolique.

Chaque estimateur de canal comprend q corrélateurs et l'erreur de rythme $e_t$ est donnée par la relation suivante:

$$e_t = \frac{\sum_{i=0}^{q-1} (q/2 - 1 - i)(W_i^1 + W_i^2 + \ldots W_i^n)}{\sum_{i=0}^{q-1} W_i^1 + W_i^2 + \ldots + W_i^n}$$

$W_i^1$, $W_i^2$,...,$W_i^n$ représentent les valeurs discrètes produites par les ièmes corrélateurs des moyens estimateurs de canal équipant les voies de réception 1, 2,...n respectivement.

En variante, l'erreur $e_t$ est donnée par la relation suivante:

$$e_t = \sum_{i=0}^{q-1} (q/2 - 1 - i)(W_i^1 + W_i^2 + \ldots + W_i^n)$$

Avantageusement, le dispositif de récupération de rythme comprend en outre un moyen de filtrage du signal d'erreur de rythme.

Les différentes caractéristiques de l'invention seront maintenant exposées de façon plus détaillée dans le cadre d'un exemple de réalisation donné à titre non limitatif en se référant aux dessins annexés.

- La figure 1 représente une installation de réception utilisant l'égalisation auto-adaptative à suréchantillonnage associée à la démodulation différentiellement cohérente et incluant un dispositif de récupération de rythme selon l'invention.
- La figure 2 est un synoptique représentant un circuit estimateur de canal faisant partie du dispositif de récupération de rythme selon l'invention.

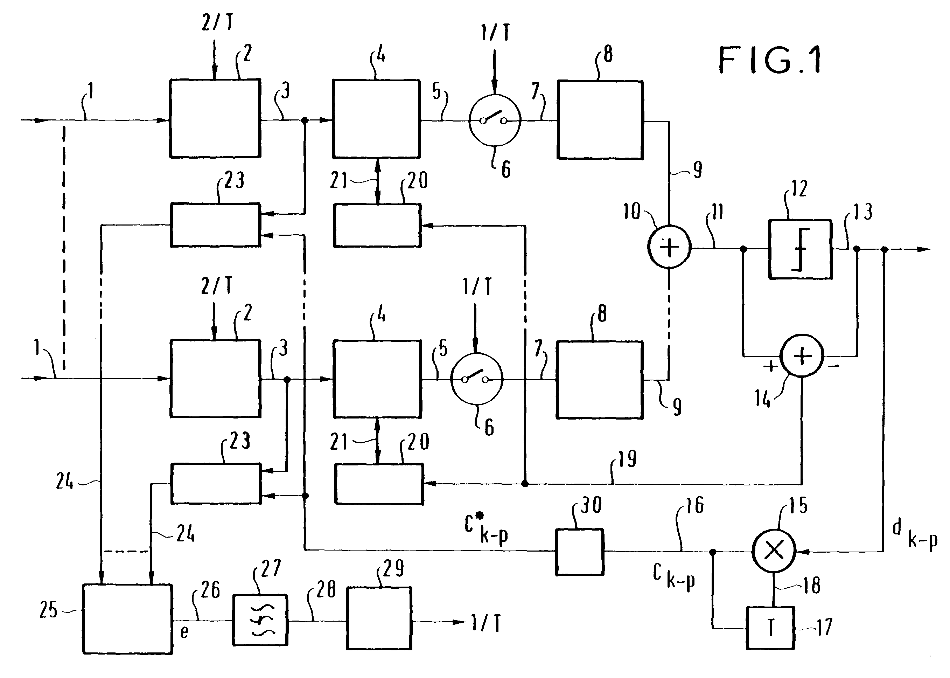

Sur les figures, des éléments identiques sont repérés par la même référence numérique. En se reportant à la figure 1, un signal analogique transmis par un émetteur au travers d'un canal dispersif et relatif à une voie de diversité est reçu en 1 après avoir été transposé en bande de base et filtré. Sur cette figure, on a représenté deux voies de diversité dont la structure est identique.

Ces signaux, présents en 1 sont numérisés selon deux voies en quadrature par deux convertisseurs analogique/numérique classiques 2 qui reçoivent un signal d'horloge d'échantillonnage dont la fréquence est multiple de la fréquence symbole 1/T, le facteur de suréchantillonnage étant dans le cas présent égal à 2. Les signaux numérisés, en 3, sont des échantillons complexes, comme il est bien connu dans la théorie du signal.

Les échantillons complexes successifs présents en 3 sont, avant démodulation par un démodulateur différentiel 8, passés dans un filtre auto-adaptatif 4, d'un modèle classique et connu en soi. Chaque filtre auto-adaptatif 4 est relié classiquement à un organe logique 20 de calcul de ces coefficients par une liaison à double sens 21

Le signal numérique qui sort en 5, de chaque filtre auto-adaptatif 4 est décimé au moyen d'un dispositif de reéchantillonnage 6 pour produire en 7 des échantillons au rythme symbolique 1/T qui sont ensuite appliqués respectivement au démodulateur différentiel 8 précité.

Les signaux respectifs, en sortie 9, des démodulateurs, sont ensuite combinés par passage dans un sommateur 10 connu en soi dans la technique de diversité.

Le signal numérique sortant en 11 de ce sommateur 10 est ensuite appliqué en entrée d'un circuit de décision 12 dont la sortie fournit des symboles décidés, présents en 13, au rythme symbolique récupéré, la sortie du circuit de décision étant celle de l'installation de réception.

Les signaux, en 11 et 13 respectivement, d'entrée et de sortie du circuit de décision sont soustraits, de façon classique, dans un dispositif de calcul d'erreur 14, dont la sortie 19 est appliquée sur une entrée d'information de chacun des organes logiques 20 précités.

Selon l'aspect essentiel de l'invention, la sortie en 13 du circuit de décision 12 est appliquée à un circuit de codage par transition 15, formé d'un multiplicateur, dont la sortie en 16 est rebouclée à son entrée à travers un circuit à retard 17 dont le retard est égal à l'espace inter-symbole initial T.

Plus précisément, le symbole décidé entrant dans le circuit 15 à l'instant kT (k étant un nombre entier) après un retard p appliqué par les filtres auto-adaptatifs 4 exprimé en nombre de temps symbole est désigné par la notation $d_{k-p}$. Le symbole décidé sortant du circuit 15 à l'instant kT est exprimé de même par la notation $c_{k-p}$. Celui qui en était sorti à l'instant (k-1)T est désigné par la notation $c_{k-p-1}$. Le fonctionnement du circuit 15 peut donc être établi à partir de la relation suivante:

$$c_{k-p} = c_{k-p-1} \times d_{k-p}$$

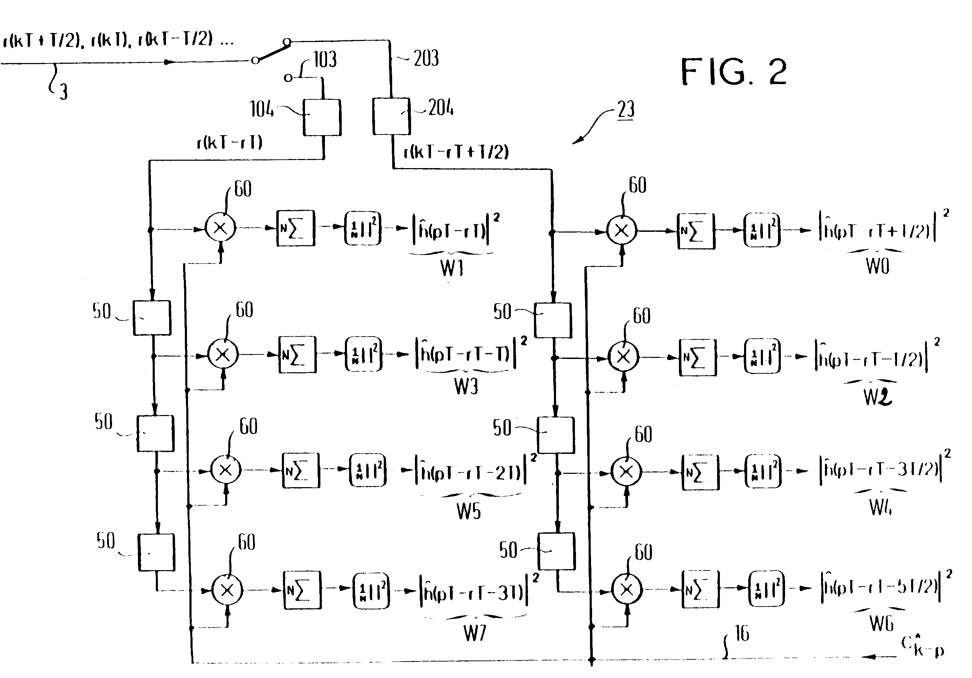

Le signal numérique présent en 16 est appliqué en entrée d'une pluralité de circuits 23 estimateur de canal, chacun équipant une voie de diversité. Chaque circuit estimateur de canal 23, décrit en détail ci-après, reçoit par ailleurs le signal numérique présent en 3 produit par le convertisseur analogique/numérique 2 qui lui est associé. De nombreux circuits estimateurs de canal ont été décrits dans la littérature. Un circuit estimateur de canal classique suffit pour l'application considérée ici, dont un exemple est représenté sur la figure 2.

En se reportant à cette figure, l'échantillon complexe présent en 3 et entrant dans le circuit 23 à l'instant $kT + T/_2$ (2 étant le facteur de suréchantillonnage précisé précédemment) est désigné par la notation r(kT + T/2). Celui qui y était entrée à l'instant kT est désigné par la notation r(kT) et celui qui y était entrée à l'instant kT - T/2 est désigné par la notation r(kT - T/2). Ces échantillons sont séparées en échantillons pairs (présents à un instant multiple entier de T) et en échantillons impairs respectivement en 103 et 203.

Les signaux numériques présents respectivement en 103 et 203 sont retardés d'un temps IT dans deux circuits à retard respectifs 104 et 204.

Le circuit estimateur de canal 23 représenté comprend 8 corrélateurs 60, quatre corrélateurs étant reliés en série à travers des circuits à retard 50 (appliquant chacun un retard égal à un temps symbole) à la sortie du circuit à retard 104, les quatre autres corrélateurs étant reliés en série à travers d'autres circuits à retard à la sortie du circuit à retard 204, comme cela est bien connu.

Tous les corrélateurs 60 reçoivent par ailleurs le signal numérique de codage par transition présent en 16, après passage dans le circuit 30 qui engendre les échantillons complexes conjugués $c^{\star}_{k-p}$.

Un tel circuit estimateur engendre, à intervalles de temps réguliers et au travers de ses corrélateurs, des valeurs discrètes $W_i$ (i étant l'indice du corrélateur) de la réponse impulsionnelle du canal pour la voie de diversité à laquelle il est affecté. Dans l'exemple représenté, le pas temporel est égal à T/2 (inverse de la fréquence de sur-échantillonnage du signal reçu).

Chaque circuit estimateur de canal produit donc en sortie 8 signaux numériques dont les valeurs discrètes sont désignés sur la figure 2 par la notation suivantes

$$W_i = \left| \frac{1}{N} \sum_{k=1}^{N} r\left(kT - lT + \frac{T}{2} - i\frac{T}{2}\right) \cdot c^*_{k-p} \right|^2$$

ou i varie de O à q-1,

q désigne le nombre de corrélateurs de chaque circuit l'estimateur de canal (dans l'exemple représenté, q est égal à 8),

l désigne le retard de compensation des circuits 104, 204,

p désigne le retard de temps de propagation de groupe de l'ensemble des filtres auto-adaptatifs,

$c^*_{k-p}$ désigne le complexe conjugué de $c_{k-p}$.

On remarquera que $W_i$ représente le module au carré de l'estimation de la réponse impulsionnelle du canal un instant donné fonction d'un corrélateur spécifique, ce qui est classique en soi.

Les signaux numériques engendrés en sortie des circuits estimateurs de canal 23 et présents respectivement en 24 sont appliqués à un circuit estimateur temporel 25 qui calcul une erreur de rythme symbolique, à intervalles de temps réguliers, qui est donnée par l'expression suivante:

$$e_t = \frac{\displaystyle\sum_{i=o}^{q-1} (q/2 - 1 - i)(W_i^1 + W_i^2 \ldots + W_i^n)}{\displaystyle\sum_{i=o}^{q-1} W_i^1 + W_i^2 + \ldots + W_i^n}$$

ou q désigne le nombre de corrélateurs de chaque circuit estimateur de canal et n désigne la voie de diversité auquel se rapporte une valeur discrète $W_i$ engendrée par un circuit estimateur 23.

Le calcul de l'erreur et peut avantageusement être simplifié en supprimant le diviseur dans l'expression précédente qui devient

$$e_t = \sum_{i=o}^{q-1} (q/2 - 1 - i)(W_i^1 + W_i^2 + \ldots + W_i^n)$$

Une valeur de l'erreur $e_t$ est engendrée à intervalles de temps réguliers, à la cadence d'une valeur pour N temps symbole T pour produire un signal d'erreur de rythme symbolique en 26 qui est filtré dans un filtre 27 de boucle numérique du premier ordre classique en soi. Le signal de sortie du filtre 27 présent en 28 asservit un oscillateur 29 commandé en tension du type analogique ou numérique lequel produit le signal de rythme symbolique récupéré ayant une période égale à T. Comme indiqué précédemment, ce signal de rythme symbolique commande les convertisseurs analogiques/numériques 2 et les circuits de reéchantillonnage 6 de l'égaliseur auto-adaptatif.

Bien entendu, l'invention n'est pas limitée à l'exemple de réalisation ci-dessus décrit, et on pourra prévoir d'autres variantes sans pour cela sortir du cadre de l'invention.

**Revendications**

1. Dispositif de récupération de rythme pour installation de réception utilisant l'égalisation auto-adaptive à sur-échantillonnage associée à la démodulation différentiellement cohérente, l'installation de réception produisant un signal de sortie représentatif de symboles décidés restitués au rythme symbolique en réponse à des signaux transmis au travers d'un canal dispersif et reçus sur une pluralité de voies de diversité caractérisé en ce qu'il comporte:

- un moyen (15) sensible au signal de sortie pour dériver un signal de codage par transition;
- une pluralité de moyens (23) estimateur de canal, chacun relié en sortie du moyen de sur-échantillonnage équipant chaque voie de diversité, chaque moyen estimateur de canal recevant en outre le signal de codage par transition pour produire un signal d'estimation de canal;
- un moyen (25) sensible aux signaux d'estimation de canal pour produire un signal d'erreur de rythme symbolique;
- un moyen (29) asservi par ledit signal d'erreur pour produire un signal d'horloge correspondant au rythme symbolique.

2. Le dispositif selon la revendication 1, dans lequel chaque moyen estimateur de canal comprend q corrélateurs (60) et l'erreur de rythme $e_t$ est donnée par la relation suivante:

$$e_t = \frac{\sum_{i=0}^{q-1} (q/2 - 1 - i)(W_i^1 + W_i^2 + \ldots W_i^n)}{\sum_{i=0}^{q-1} W_i^1 + W_i^2 + \ldots + W_i^n}$$

où $W_1^1, W_1^2, \ldots, W_1^n$ désignent des valeurs discrètes produites par les ièmes corrélateurs des moyens estimateurs de canal équipant les voies de réception 1, 2,..., n respectivement.

3. Le dispositif selon la revendication 1, dans lequel chaque moyen estimateur de canal comprend q corrélateurs (60), et l'erreur de rythme $e_t$ est donnée par la relation suivante:

$$e_t = \sum_{i=0}^{q-1} (q/2 - 1 - i)(W_i^1 + W_i^2 + \ldots W_i^n)$$

où $W_i^1, W_i^2, \ldots, W_i^n$ désignent les valeurs discrètes produites par les ièmes corrélateurs des moyens estimateur de canal équipant les voies de réception 1, 2,...n respectivement.

4. Le dispositif selon l'une des revendications 2 ou 3 comprenant en outre un moyen de filtrage (27) du signal d'erreur de rythme.

**Patentansprüche**

1. Vorrichtung zur Taktwiedergewinnung für eine Empfangseinrichtung, die die selbstanpassende Entzerrung mit Übertastung in Verbindung mit der differential kohärenten Demodulation verwendet und ein Ausgangssignal erzeugt, das für wiedergewonnene entschiedene Symbole im Symboltakt aufgrund der Signale repräsentativ ist, die über einen dispersiven Weg übertragen und über eine Mehrzahl von Diversity-Kanälen empfangen wurden, dadurch gekennzeichnet, daß sie enthält:

- ein Mittel (15), das auf das Ausgangssignal anspricht, um ein Signal der Kodierung durch einen Übergang abzuleiten,

- eine Mehrzahl von Kanalschätzmitteln (23), die je an den Ausgang des Übertastungsmittels in jedem Diversity-Kanal angeschlossen sind, wobei jedes Kanalschätzmittel außerdem das Signal der Kodierung durch einen Übergang empfängt, um ein Kanalschätzsignal zu erzeugen,
- ein Mittel (25), das auf die Kanalschätzsignale anspricht, um ein Symboltakt-Fehlersignal zu erzeugen,
- ein Mittel (29), das durch das Fehlersignal nachgeregelt wird, um ein Taktsignal entsprechend dem Symboltakt zu erzeugen.

2. Vorrichtung nach Anspruch 1, in der jedes Kanalschätzmittel q Korrelatoren (60) enthält und der Fehler $e_t$ des Symboltakts durch folgende Beziehung gegeben ist:

$$e_t = \frac{\sum_{i=o}^{q-1} (q/2 - 1 - i)(W_i^1 + W_i^2 + \ldots W_i^n)}{\sum_{i=o}^{q-1} W_i^1 + W_i^2 + \ldots + W_i^n}$$

worin $W_1^1$, $W_1^2$, ... $W_1^n$ diskrete Werte darstellen, die von der i-ten Korrelatoren der Kanalschätzmittel in den jeweiligen Empfangskanälen 1, 2, ...., n erzeugt werden.

3. Vorrichtung nach Anspruch 1, in der jedes Kanalschätzmittel q Korrelatoren (60) enthält und der Fehler $e_t$ des Symboltakts durch folgende Beziehung gegeben ist:

$$e_t = \sum_{i=o}^{q-1} (q/2 - 1 - i)(W_i^1 + W_i^2 + \ldots W_i^n)$$

worin $W_1^1$, $W_1^2$, ... $W_1^n$ diskrete Werte darstellen, die von den i-ten Korrelatoren der Kanalschätzmittel in den jeweiligen Empfangskanälen 1, 2, ...., n erzeugt werden.

4. Vorrichtung nach einem der Ansprüche 2 und 3, die außerdem ein Mittel (27) zum Filtern des Symboltakt-Fehlersignals enthält.

**Claims**

1. Timing recovery device for a receiver installation using oversampling and adaptive equalisation in association with differentially coherent demodulation, the receiver installation producing an output signal representative of decided symbols reconstituted at the symbol timing rate in response to signals transmitted over a dispersive path and received on a plurality of diversity channels, characterised in that it comprises:

- means (15) responsive to said output signal to derive a transition coding signal;
- a plurality of channel estimator means (23) each connected to an output of the oversampling means equipping each diversity channel, each channel estimator means further receiving the transition coding signal to produce a channel estimate signal;
- means (25) responsive to said channel estimate signals to produce a symbol timing error signal;
- means (29) controlled by said error signal to produce a clock signal in corresponding relationship to the symbol timing rate.

2. Device according to claim 1 wherein each channel estimator means comprises $\underline{q}$ correlators (60) and the timing error $e_t$ is given by the following equation:

$$e_t = \frac{\displaystyle\sum_{i=0}^{q-1} (q/2 - 1 - i)(W_i{}^1 + W_i{}^2 + ... W_i{}^n)}{\displaystyle\sum_{i=0}^{q-1} W_i{}^1 + W_i{}^2 + ... + W_i{}^n}$$

in which $W_i{}^1$, $W_i{}^2$, ..., $W_i{}^n$ denote discrete values produced by the ith correlators of the channel estimator means of respective receive channels 1, 2, ..., n.

3. Device according to claim 1 wherein each channel estimator module comprises $\underline{q}$ correlators (60) and the timing error $e_t$ is given by the following equation:

$$e_t = \sum_{i=0}^{q-1} (q/2 - 1 - i)(W_i{}^1 + W_i{}^2 + ... W_i{}^n)$$

in which $W_i{}^1$, $W_i{}^2$, ..., $W_i{}^n$ denote the discrete values produced by the ith correlators of the channel estimator means of the respective receive channels 1, 2, ... $\underline{n}$.

4. Device according to claim 2 or claim 3 further comprising means (27) for filtering the timing error signal.

FIG.1

FIG. 2

EP 0 547 539 B1